# FASCICULE DE BREVET EUROPEEN

(11) **EP 3 981 185 B1**
(45) Date de publication et mention de la délivrance du brevet: **09.04.2025**
(21) Numéro de dépôt: 20730435.3
(22) Date de dépôt: 10.06.2020
(51) Int. Cl.: H04W 12/06

(54) **PROCEDE ET SYSTEME POUR ACQUERIR, SAUVEGARDER ET UTILISER DES DONNEES DE PREUVE**
VERFAHREN UND SYSTEM ZUR ERFASSUNG, SPEICHERUNG UND VERWENDUNG VON BEWEISDATEN
METHOD AND SYSTEM FOR ACQUIRING, SAVING AND USING EVIDENCE DATA

(30) Priorité: 10.06.2019 FR 1906144
(43) Date de publication de la demande: 13.04.2022
(73) Titulaire: Imprimerie Nationale, 75116 Paris (FR)
(72) Inventeur: DRUBAY, Stéphane, 59148 Flines-lez-Râches (FR); FOUTREIN, Thomas, 59390 Lys Lez Lannoy (FR); DEMEESTERE, Jean-François, 59295 PAILLENCOURT (FR)
(74) Mandataire: Brun, Philippe Alexandre Georges
(86) Numéro de dépôt international: PCT/EP2020/066013
(87) Numéro de publication internationale: WO 2020/249581

(56) Documents cités:
- WO-A2-2014/140814
- US-A1- 2011 109 508
- US-B1- 9 747 768

## Description

Les documents US2011/109508, US9747768 et WO2014/140814 sont considérés état de l'art.

L'invention concerne un système et un procédé pour générer un flux de données ou un ensemble de données composé de données d'horodatage et éventuellement de données propres à un individu ou à un ensemble d'individus, et sauvegarder lesdites données.

Elle est, par exemple utilisée par un individu pour acquérir et mémoriser des données de localisation datées, afin de lui permettre de prouver sa présence dans un lieu donné, à une date et à un instant donnés ou sa présence auprès d'autres personnes dans son entourage. L'invention permet aussi de prouver qu'un individu a bien exécuté une action. Les preuves se présentent sous la forme de données numériques qui seront stockées, par exemple, dans une base de données ou une mémoire locale ou externe pour être imprimées en cas de besoin sur un document ou affichées sur un dispositif numérique ou autre.

Il est parfois nécessaire pour un individu de disposer de données prouvant sa présence dans un lieu, une ou plusieurs actions accomplies sur un système, ou encore sa proximité avec d'autres individus à un instant donné dans un lieu ou un espace défini. Ces preuves peuvent être utilisées dans le cadre d'une enquête pour témoigner d'un évènement ou encore pour justifier un avis sur un lieu ou un service.

Pour cela, il est nécessaire de réunir différentes preuves, se présentant sous la forme, par exemple :
- D'un témoignage d'une autre personne,
- D'une photo ou d'un document certifié attestant de sa présence,
- De coordonnées issues d'un système de positionnement, de type GPS (Global Positioning System). Une autre solution consiste à accepter d'être suivi ou tracé par un système tiers, par exemple :
- Un système de vidéo surveillance,
- Un enregistrement automatique de la position de type GPS (Global Positioning System),
- Un système de navigation.

Ces derniers systèmes ne respectent pas vraiment la vie privée, la confidentialité d'un individu, à moins qu'ils ne soient activés uniquement par l'individu lorsque ce dernier sait ou anticipe le fait qu'il lui faudra des preuves certaines et irréfutables de sa présence dans un lieu donné ou encore d'une action qu'il a accomplie.

D'autre part, retrouver des témoins, faire certifier un document ne sont pas toujours des actes faciles. L'idée de la présente invention est de proposer un système qui est activé par un individu lorsqu'il a besoin d'acquérir et de sauvegarder un ensemble de données qui sera désigné dans la suite de la description sous le terme « preuve ». Le mot « preuve » englobe notamment la preuve de présence d'un individu dans un lieu, à une date et un instant donnés, la preuve de proximité de l'individu par rapport à un autre individu ou d'un dispositif, la preuve d'action ou d'usage de l'individu sur un bien ou un service, ou encore toute autre preuve utile à un individu ou à un utilisateur. Des exemples de preuves sont donnés plus loin dans la description. On utilisera indifféremment le mot « individu » ou « utilisateur ».

Le procédé et le système selon l'invention reposent notamment sur un échange de données entre un utilisateur et un dispositif ou d'autres utilisateurs. Cet échange est à l'initiative d'un utilisateur qui souhaite se constituer une base de données contenant par exemple des données de localisation datées, et éventuellement des données associées à des actions qu'il a accomplies.

Dans la suite de la description le terme « preuve » désigne une structure de données associées à un individu que l'individu peut mémoriser dans une base de données en local ou sur un serveur de stockage.

L'invention concerne un procédé pour générer et sauvegarder un ensemble de données numériques ou preuves associées à un individu, au sein d'un système comprenant plusieurs dispositifs émetteurs et récepteurs de preuves et un support de communication entre lesdits dispositifs, caractérisé en ce qu'il comporte au moins les étapes suivantes :
Pour la génération des données constituant une preuve :
- Au niveau d'un dispositif émetteur d'une preuve, définir un bloc de données caractérisant la preuve, le bloc de données comprenant au moins un paramètre d'horodatage, un indicateur identifiant ledit dispositif émetteur de preuves, des données de preuve, une signature des données d'émission par un dispositif d'émission,
- Au niveau de l'individu souhaitant se constituer un ensemble de preuves, ajouter au bloc de données de réception des données caractérisant une preuve, un paramètre d'horodatage, un indicateur identifiant le dispositif récepteur d'une preuve, une signature de preuve,

Pour utiliser une preuve :
- Un individu émet une requête contenant ladite preuve en prouvant qu'il est destinataire de cette preuve à un système tiers,
- Ledit système tiers contacte le dispositif émetteur de la preuve en lui envoyant au moins ledit paramètre d'horodatage, ledit indicateur identifiant le dispositif émetteur de preuves, lesdites données de preuve, l'émetteur signe lesdits blocs et renvoie la signature au système tiers qui compare ladite signature à ladite signature origine, afin que le système tiers valide la preuve dans le cas où les signatures concordent.

Le procédé peut comporter en outre les étapes suivantes :
- Un dispositif émetteur de preuves de proximité génère un ensemble de données d'émission composées d'une partie contenant des paramètres d'horodatage, un identifiant d'émission du dispositif émetteur de preuves, une signature des données d'émission,
- Un individu reçoit une preuve de proximité émise par un dispositif émetteur et mémorise ladite preuve de proximité en ajoutant des données d'horodatage et d'identification du dispositif récepteur de preuves de proximité,
- Pour rechercher une preuve de proximité, ledit individu émet une requête de recherche de preuve vers un système tiers qui transmet les données d'horodatage contenu dans la requête et l'indicateur au serveur de stockage des données.

Le procédé peut comporter les étapes suivantes :
Une borne de présence
- Génère un bloc de données d'émission comprenant au moins un paramètre d'horodatage, un identifiant, des données de proximité,
- Génère un fichier de chiffrement des données (hash) et signe les données chiffrées,
- Émet la preuve de présence vers un utilisateur demandeur desdites données, ledit utilisateur mémorise ladite preuve de présence après avoir ajouté des données d'horodatage et un indicateur du dispositif récepteur de la preuve,

Pour rechercher une preuve de présence par un individu, ledit individu émet une requête de recherche de preuve vers un système tiers qui transmet les données d'horodatage contenu dans la requête et son identifiant au serveur de stockage des données,

Lorsque la preuve est retrouvée dans le stockage des données, le service tiers valide la preuve.

Il peut aussi comporter au moins les étapes suivantes :
- Un dispositif génère une preuve d'action en transmettant à un individu un ensemble de données contenant des paramètres d'horodatage, un identifiant, des données caractérisant l'action, puis chiffre les données avec une clé publique de l'individu, génère un hash et une signature du hash des données d'émission,
- Ledit dispositif émet ladite preuve d'action vers l'individu et/ou sur un espace de stockage. Le procédé peut comporter en outre les étapes suivantes :
- Une requête de recherche de preuve est transmise par un premier utilisateur U₁ à un serveur de broadcast,
- Le serveur de broadcast recherche un dispositif émetteur d'une preuve et génère un aléa,
- L'aléa est transmis à l'utilisateur U₁ pour signature, l'utilisateur U₁ signe l'aléa et le retransmet au serveur de broadcast qui déclenche, une procédure de recherche d'un utilisateur U₂ détenant une preuve requise par le premier utilisateur U₁,
- Le serveur de broadcast transmet, au deuxième utilisateur U₂ l'indicateur identifiant le dispositif émetteur de la preuve.
- Si le deuxième utilisateur dispose de la preuve, il transmet au serveur de broadcast un message contenant la signature des données d'émission de la preuve de proximité,
- Le serveur de broadcast compare la signature transmise par le deuxième utilisateur U₂ avec la signature du bloc d'émission contenu dans la preuve pour s'assurer que le deuxième utilisateur U2 est en possession de la preuve, puis génère un aléa correspondant,
- L'aléa associé au deuxième utilisateur est transmis à ce dernier pour signature, avant retransmission de l'aléa signé, au serveur de Broadcast qui vérifie les signatures avant de mettre en relation, le premier utilisateur U₁ demandant une preuve de proximité et le deuxième utilisateur U₂ détenant la preuve d'usage par transmission des adresses de chacun des utilisateurs.

L'invention concerne aussi un système pour construire un ensemble de données correspondant à une preuve associée à un premier utilisateur U₁ au sein d'un système comprenant un ou plusieurs dispositifs émetteurs de preuve communiquant entre eux via un protocole de communication, un serveur de broadcast et un espace de stockage caractérisé en ce qu'il comporte au moins les éléments suivants :
- Un dispositif émetteur de preuves est équipé de moyens de communication et d'une application configurée pour générer un ensemble de données comprenant une donnée d'horodatage, un identifiant, des données caractérisant une preuve, un paramètre de signature des données,
- Ledit premier utilisateur est équipé de moyens de communication et d'une application portefeuille de preuves configurée pour ajouter à un ensemble de données reçues, un paramètre d'horodatage, un indicateur identifiant le dispositif émetteur de l'ensemble de données, une signature, une clé de chiffrement,
- Un dispositif tiers configuré pour contacter le dispositif émetteur de la preuve en lui envoyant au moins ledit paramètre d'horodatage, ledit indicateur identifiant le dispositif émetteur de preuves, lesdites données de preuve, l'émetteur signe lesdits blocs et renvoie la signature au système tiers configuré pour comparer ladite signature à ladite signature origine et pour valider la preuve dans le cas où les signatures concordent.

Le dispositif d'émission/réception est configuré pour dialoguer par Wifi, radio, Bluetooth.

L'espace de stockage se trouve, par exemple, sur un serveur de stockage.

Un dispositif émetteur de preuves peut être une borne d'action configurée pour émettre une preuve indiquant qu'une action a été réalisée par un individu.

D'autres caractéristiques et avantages de la présente invention apparaîtront mieux à la lecture de la description d'exemples de réalisation donnés à titre illustratif annexés des figures qui représentent :
[Fig.1] un schéma général d'échange de preuves au sein du système selon l'invention,
[Fig.2] un exemple du format final des données formant une preuve,
[Fig.3] un exemple de format d'une preuve de proximité,
[Fig.4] un organigramme des étapes du processus d'émission d'une preuve de proximité,
[Fig.5] un exemple de format d'une preuve de présence,
[Fig.6] un organigramme des étapes du processus d'émission d'une preuve de présence,
[Fig.7] un exemple de format d'une preuve de présence d'action,
[Fig.8] un organigramme des étapes du processus d'émission d'une preuve d'action.
[Fig.9] un organigramme des étapes du processus d'émission d'une preuve,
[Fig.10] un organigramme des étapes du processus mis en œuvre par un individu pour rechercher une preuve.

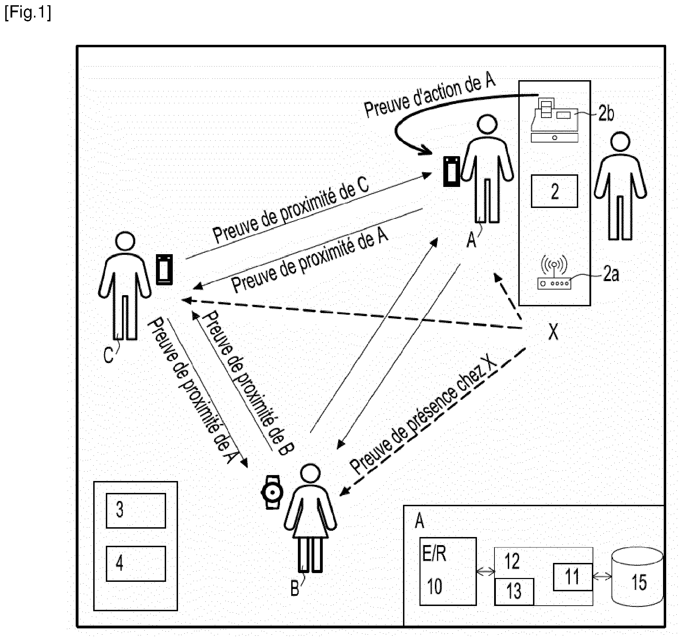

La figure 1 illustre un système constitué de trois individus A, B et C, d'un système d'émission de preuves comprenant par exemple une borne d'action 1 et une borne de présence 2, un serveur de diffusion ou broadcast 3, un serveur de stockage 4. Ces éléments dialoguent entre eux via un protocole de communication connu de l'homme du métier, et en utilisant un media tel que le Wifi, le Bluetooth, etc.

L'individu A qui cherche à établir une ou plusieurs preuves, par exemple la preuve de sa présence dans un lieu donné, une preuve d'action et/ou une preuve montrant qu'il se trouvait à proximité des deux autres individus B et C possède un terminal mobile, tel qu'un téléphone, une tablette, une montre connectée ou de manière plus générale un objet connecté. L'objet connecté comprend des capacités à communiquer avec un environnement, à mémoriser des données numériques, à activer une recherche de preuve via un logiciel configuré pour « réveiller » d'autres dispositifs utilisateurs afin que ces derniers recherchent des preuves et les transmettent. Une preuve est constituée d'un ensemble de données numériques horodatées et caractéristiques d'une localisation d'une personne et/ou d'une action de cette personne.

Le terminal mobile connecté (individu A qui souhaite se constituer une base constituée de données de preuve) comprend un émetteur/récepteur radio 10, un processeur 11, un système d'exploitation 12 sur lequel est exécutée une application portefeuille de preuves 13 et un module 14 configuré pour collecter des preuves émises par d'autres utilisateurs ou par l'environnement. L'application portefeuille de preuves comprend un module 131 adapté à générer une preuve de présence, un module 132 adapté à générer une preuve de proximité et un module 133 adapté à générer une preuve d'action. Le terminal mobile peut aussi comporter une mémoire 15 pour stocker en local les preuves.

Le module émission/réception radio est configuré pour communiquer avec les autres utilisateurs du système par Wifi, radio, par transmission des informations d'un appareil à un autre de façon automatique et rapide par exemple via la transmission « communication dans le voisinage proche » ou NFC (Near Field Communication), par Bluetooth faible énergie ou BLE (Bluetooth Low Energy).

Le terminal mobile connecté est configuré de façon à récupérer les preuves de présence, de proximité ou d'action qui seront traitées par l'application portefeuille de preuves d'un individu.

L'application portefeuille de preuves installée sur le terminal mobile connecté d'un individu a notamment pour fonction de gérer différents types de preuves qu'un utilisateur souhaite acquérir et conserver pour une utilisation future. Cette application a notamment pour fonction :
- D'afficher et de stocker des preuves reçues par l'utilisateur, telles que des preuves de présence, des preuves de proximité et/ou des preuves d'action ou d'usage,
- De générer à des instants précis, des données prouvant la présence d'un utilisateur dans un lieu donné ou la proximité d'un utilisateur à d'autres utilisateurs ou à un dispositif, ou des données associées à une action exécutée par l'individu, la génération de ces données peut être effectuée à des intervalles réguliers ou laissée à l'initiative de l'utilisateur,
- De stocker ces données ou au moins une partie de ces données en leur associant un identifiant en local ou sur un serveur de données, l'identifiant est une donnée associée à une preuve, valable pour une plage temporelle et propre à un individu,
- De lancer une recherche d'un propriétaire de preuve via un serveur de recherche, par exemple la recherche d'un utilisateur détenant une preuve de proximité, ou la recherche d'une borne de preuve d'action,
- De permettre à un individu utilisateur d'utiliser une preuve ou plusieurs preuves récupérées pour renforcer une action sur un service tiers (commentaire sur un service d'avis en ligne prouvant l'authenticité de cet avis donné par un utilisateur), ou pour une utilisation dans le cas d'un contentieux ou encore pour une impression de ces informations sur un document ou un autre support.

Le dispositif public d'émission de preuves 2 se présente sous la forme d'une borne de présence 2a et/ou une borne d'action 2b. Une borne peut être associée à un lieu donné.

Une borne de présence 2a et/ou une borne d'action 2b comprend par exemple au moins :
- Des moyens de communication, émetteur/récepteur, nécessaires à l'émission de preuves selon un protocole de communication choisi, par exemple Bluetooth BLE, Wifi, Radio, NFC, etc.,
- Une unité de calcul - crypto + génération de preuves avant transmission - stockage de preuves - données associées à une preuve +horodatage,
- Un dispositif permettant de vérifier la géolocalisation du lieu (puce GPS, par exemple), notamment dans le cas d'une preuve de présence,
- Une borne de présence ou d'action permet notamment :
   - D'émettre des preuves de présence ou d'action dans un rayon plus ou moins large,
   - D'émettre des codes à usage unique utilisés pour des preuves d'action, permettant d'associer un individu et une borne d'action afin de renforcer le niveau d'une preuve en cas de nécessité.

Le serveur de « broadcast » 3 est un système ayant notamment pour fonction d'envoyer des messages de requêtes à un ensemble d'utilisateurs équipés de l'application portefeuille de preuves. Pour cela, le serveur de broadcast stocke des jetons générés sur les terminaux des utilisateurs. Cette donnée est anonyme. Cette recherche est déclenchée par un utilisateur lorsque ce dernier recherche des utilisateurs qui étaient dans son entourage à une date donnée.

Le serveur de stockage de données 4 est un système ouvert et distribué, accessible à tous les utilisateurs de la solution. Il permet d'y décharger une ou plusieurs preuves stockées sur un dispositif personnel. Cette opération permet notamment :
- La sauvegarde de preuves en cas de perte ou du vol du terminal connecté d'un utilisateur,
- La libération de l'espace mémoire sur le terminal connecté d'un utilisateur,
- La facilité de partage des preuves entre les différents individus présents dans le système, via leurs terminaux connectés.

Le serveur de stockage garantit nativement la disponibilité et l'intégrité des preuves. Le niveau de confidentialité des preuves sera déterminé en fonction de la nature de la preuve, preuve publique ou preuve privée, par exemple.

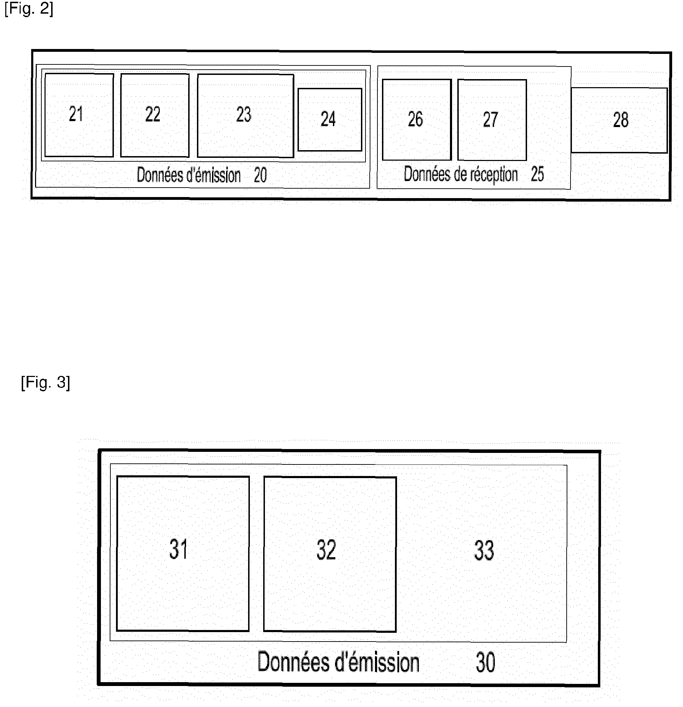

La description donne quelques exemples détaillés de preuves et de structure de preuves. Une preuve est un ensemble de données numériques constitué par exemple de deux parties, figure 2 :
- Un bloc de données d'émission 20, caractérisant la preuve par le dispositif d'émission de la preuve, public ou personnel ; le bloc de données d'émission comprend des paramètres d'horodatage 21, un indicateur 22 identifiant un dispositif à un instant donné, des données de preuve de présence et/ou d'actions, 23, une signature 24 des données d'émission par un dispositif d'émission. Ces données sont émises par un utilisateur ou par une borne de présence qui va générer des données constituant une preuve d'action ou d'usage,
- Un bloc de données de réception 25 ajouté par le terminal mobile connecté de l'utilisateur après réception des données d'émission contenant les paramètres caractérisant une preuve, par exemple, des données d'horodatage 26, un indicateur 27 identifiant un dispositif à un instant donné d'une preuve de présence ou de proximité, une signature de preuve par un dispositif de réception 28, ces données correspondent à un utilisateur qui va recevoir une preuve d'usage.

Une preuve est un ensemble de données qui va permettre à l'utilisateur de justifier :
- Sa présence dans un lieu X à un instant t, avec une preuve de présence (données numériques de géolocalisation) émise par une borne de présence, et/ou
- Sa proximité avec une personne Y (individu Y) à un instant t, avec une preuve de proximité émise par le dispositif personnel d'émission / réception de la personne Y, et/ou
- La réalisation d'une action (ou usage), paiement d'une prestation par exemple, avec une preuve d'action (code à usage unique) émise par un dispositif public d'émission/réception de preuve.

Lors d'une première phase, un individu (utilisateur) va activer l'application « portefeuille de preuves » installée sur son terminal mobile connecté en exécutant les étapes décrites ci-après. Lors d'une phase d'authentification, l'utilisateur s'enrôle sur l'application portefeuille de preuves. L'utilisateur s'inscrit à l'application portefeuilles de preuve en utilisant l'interface de son terminal mobile, par exemple un téléphone, et renseigne ses données d'identification, son nom, son prénom, son adresse personnelle ou toutes les autres données qui vont être utiles pour générer des données de preuves qui lui sont personnelles. L'application portefeuille de preuves en retour va générer une clé d'accès au portefeuille de preuves attribuée à cet utilisateur. L'application portefeuille de preuves génère aussi une clé de chiffrement qui servira à protéger le conteneur destiné à contenir les preuves et qui est chargé sur le dispositif mobile de l'utilisateur. La clé de chiffrement peut prendre toute sorte de format connu de l'homme du métier.

Lors d'une deuxième phase, l'application portefeuille de preuves va créer un conteneur sur le terminal mobile connecté. Ce conteneur est un espace sécurisé créé sur le terminal mobile connecté. Il est utilisé pour stocker les différents éléments nécessaires au bon fonctionnement de l'application selon l'invention. Son accès est protégé par la clé d'accès générée par l'utilisateur lors de la phase d'authentification. De manière optionnelle, un conteneur protégé en accès par une clé d'accès peut être créé sur un serveur de stockage. Cette création se fait lorsque le dispositif mobile ou terminal mobile est connecté au serveur de stockage et permet de sécuriser la sauvegarde des données. L'utilisateur, en activant l'application portefeuille de preuves, autorise cette application à utiliser des moyens de communication nécessaires au bon fonctionnement du système selon l'invention. La communication entre le système (d'autres individus situés dans une zone donnée ou un dispositif de preuve d'action) et l'utilisateur peut se faire via la technique Wifi, le réseau mobile, etc. La communication entre les dispositifs d'émission/réception équipant les utilisateurs du système se fait par exemple, au moyen des systèmes précités Wifi, Bluetooth, NFC, etc.

Lorsqu'un utilisateur veut retrouver des données caractéristiques d'une preuve d'usage (d'action), preuve de présence ou autre, il va activer un dispositif ou moteur d'émission/réception de preuves. Ce moteur d'émission/réception de preuves une fois activé est adapté à générer des clés et des preuves. Il écoute et émet des preuves à destination de son environnement. Ce dispositif émission/réception de preuves active l'application portefeuille de preuves de façon à émettre une requête d'interrogation de détention d'une preuve via le serveur de broadcast vers un ensemble d'individus et/ou d'un dispositif susceptibles de détenir une preuve de présence, de proximité ou d'action. La requête de demande de preuve sera ensuite traitée par le récepteur, qui renverra vers l'utilisateur demandeur de preuve les informations prouvant que ce dernier était dans un lieu donné, à une date et une heure données, ou que ce dernier a réalisé une action sur un dispositif, tel que le paiement d'un article.

La description explicite un exemple d'émission et/ou de réception de preuves par un utilisateur, donné à titre illustratif afin de mieux faire comprendre l'objet de l'invention.

Il existe notamment deux manières de collecter et de stocker des preuves émises par un autre utilisateur et/ou par l'environnement, i.e., borne de présence, par exemple.

Selon un premier mode de fonctionnement, dès que l'utilisateur arrive à portée d'un dispositif émettant des preuves, il reçoit une preuve émise via le media de communication. Cette preuve peut être une preuve de proximité émise par un autre utilisateur du système ou une preuve de présence. La preuve est stockée dans la mémoire du terminal mobile de l'utilisateur et enrichie avec des métadonnées d'horodatage et de géolocalisation. Un exemple de structure de preuve a été présentée en figure 2, l'ajout de métadonnées d'horodatage et de géolocalisation se fait par des techniques connues de l'homme du métier. Ce type de collecte et de stockage est réalisé sans intervention de l'utilisateur, une fois que l'application portefeuille de preuve et le moteur de recherche sont activés. Selon un deuxième mode de fonctionnement, à la suite d'une action réalisée sur un système, par exemple une caisse enregistreuse d'un magasin, une preuve d'action de paiement d'un objet ou d'un service est émise et enregistrée sur le dispositif de l'utilisateur. Ce type de collecte nécessite une manipulation de la part de l'utilisateur (scan d'un QRCode, lecture NFC, etc...).

La figure 3 illustre un exemple de format de données d'une preuve de proximité. Une preuve de proximité est émise par un terminal utilisateur qui va émettre des preuves de proximité à intervalles réguliers et de manière continue, toutes les N secondes ou minutes. Sans sortir du cadre de l'invention, il est possible à un terminal utilisateur de diffuser ces preuves à tout instant, à des intervalles temporels de tailles variables.

Le bloc de données d'émission d'une preuve de proximité est par exemple constitué des éléments listés ci-après.

Une partie contenant des paramètres d'horodatage, 31, un ou plusieurs des paramètres temporels suivant :
- L'Année
- Le Mois
- Le Jour
- L'Heure
- La Minute
- La Seconde

Un numéro d'émission UUID (Universally Unique Identifier), 32, connu de l'homme du métier : c'est un numéro unique à un dispositif personnel valable pendant une durée donnée et limitée ; ce numéro est associé à une émission et/ou à une réception de preuve de proximité et dépend de l'appareil ou dispositif l'ayant émis, il peut être différent à chaque émission de preuve,
- Une signature des données d'émission, 33 :
- La génération d'un Hash d'émission : empreinte réalisée par une fonction de hachage (Sha-2, Sha-3, ...) sur l'ensemble des données d'émission (données de preuve émises par un individu ou un dispositif public) afin de sécuriser les données : Horodatage, UUID. Tout autre logiciel de sécurisation des données peut être utilisé,
- Une signature du Hash par une clé privée du dispositif d'émission de preuve.

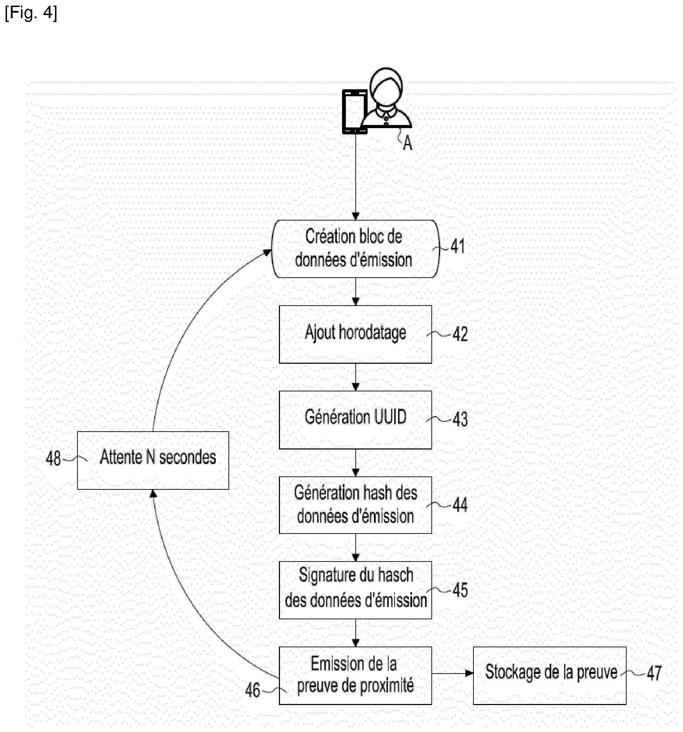

La figure 4 illustre les étapes exécutées par une application de génération et d'émission d'une preuve de proximité par un des utilisateurs présents dans le système, implémentée par un dispositif d'émission/réception.

L'application exécute successivement les étapes suivantes : la génération d'un bloc de données d'émission 41, l'ajout de paramètres d'horodatage 42, la génération d'un numéro d'émission 43, la génération hash de données d'émission 44, la signature du hash des données d'émission 45, l'émission de la preuve de proximité 46, le stockage de la preuve dans l'application portefeuille de preuves 47. Les étapes sont répétées 48 toutes les N secondes, par exemple, ou selon un autre schéma temporel défini en fonction de l'application.

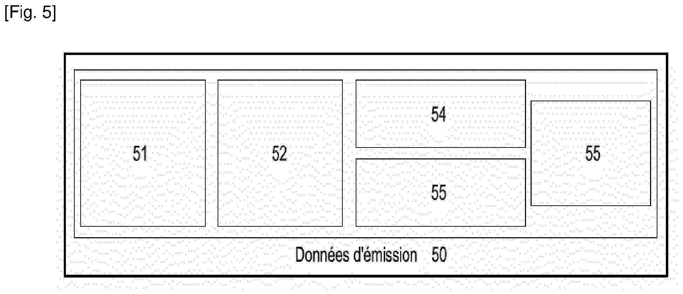

La figure 5 illustre un format de données constituant une preuve de présence. Les preuves de présence sont émises par des dispositifs publics d'émission de preuve de présence, par exemple par une borne de présence.

La borne de présence émet des preuves de présence à intervalle régulier, par exemple, toutes les N secondes ou minutes et de manière continue par exemple.

Le bloc de données d'émission d'une preuve de présence a quasiment le même format que celui d'une preuve de proximité. Il contient en plus un bloc de données de présence. Ce bloc de données de présence contient des éléments propres au dispositif d'émission de ces preuves de présence :
- L'identifiant de la borne de présence, 51,
- L'adresse du lieu où est placée la borne de présence, 52,
- Les coordonnées GPS ou l'adresse du lieu où est placée la borne de présence, 53,
- Le bloc émission de preuves de proximité 54 et la signature des données d'émission par le dispositif d'émission 55.

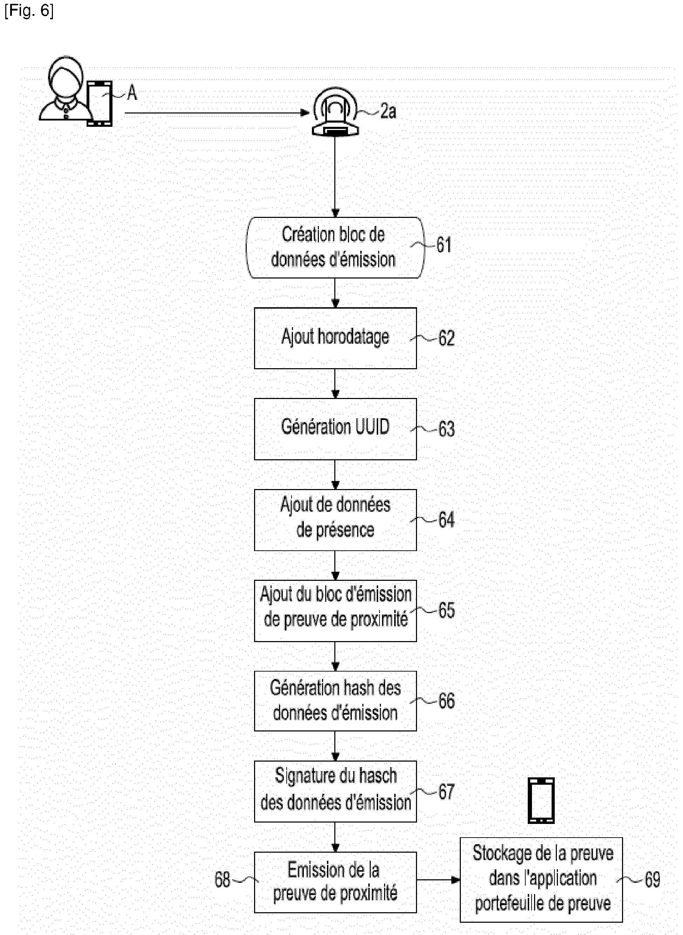

La figure 6 est un exemple illustrant les étapes pour émettre une preuve de présence, par une borne de présence. L'émission de la preuve de présence va prendre en compte la preuve de proximité émise précédemment.

Le dispositif public d'émission ou borne de présence reçoit une preuve de proximité transmise par un utilisateur demandeur d'une preuve. La borne de présence génère un bloc de données d'émission 61 comprenant au moins les informations suivantes : des paramètres d'horodatage 62, l'identifiant du dispositif public d'émission 63, les données de présence 64, l'ajout des données de proximité 65, les données contenues dans la preuve de proximité reçue, puis il génère un hash des données d'émission 66 et une signature du hash 67. A partir de ces informations, la borne de présence va émettre une preuve de présence 68 qui va être stockée ou mémorisée dans l'application portefeuille de preuves 69, par exemple de l'utilisateur demandeur de la preuve.

Une preuve d'action est émise par un dispositif public d'émission de preuves d'action ou borne d'action. Une preuve d'action sera émise uniquement lorsqu'une « action » est réalisée par un utilisateur (paiement d'un objet, d'un service, etc...) sur la borne d'action.

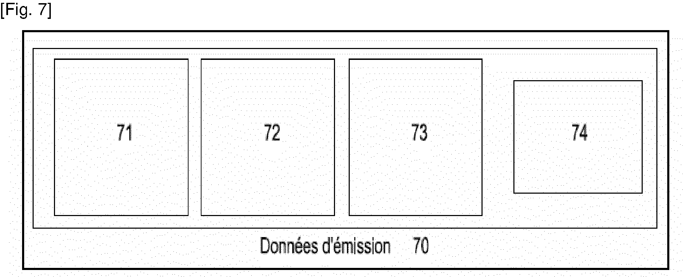

La figure 7 illustre un exemple de structure d'une preuve d'action.

Le bloc de données d'émission d'une preuve d'action est le même qu'une preuve de proximité sauf qu'il contient en plus un bloc de données d'action chiffrées par la clé publique du client. Ce bloc de données d'action contient des éléments caractéristiques de l'action réalisée, par exemple :
- Horodatage (émission des données d'action), 71,
- L'identifiant d'action, 72,
- Le type d'action, 73,
- Les métadonnées caractérisant l'action, dépendant du type, 74.

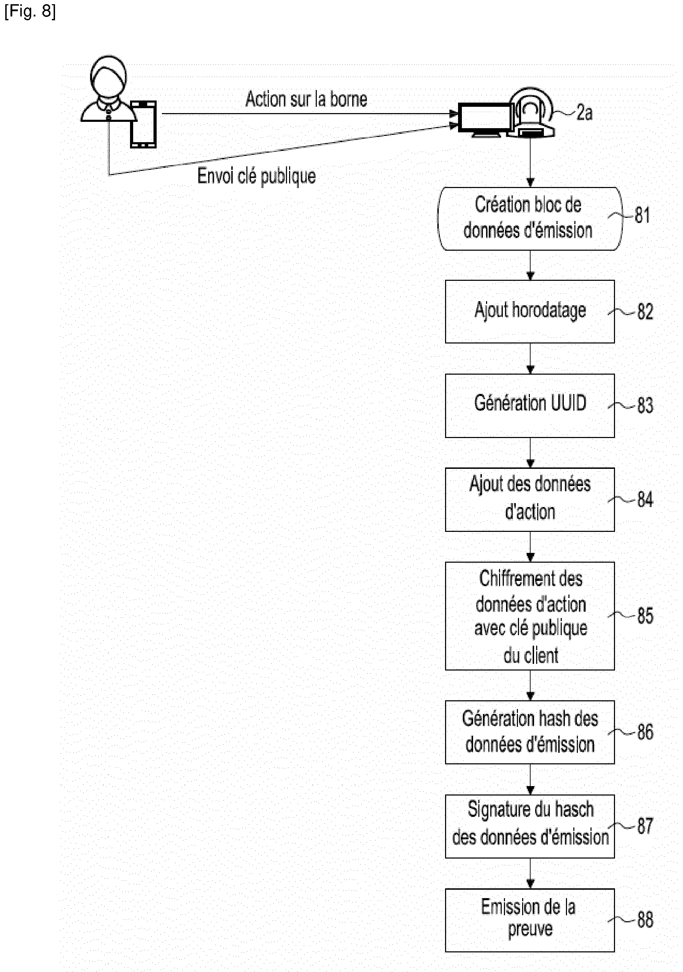

La figure 8 illustre un exemple d'étapes mises en œuvre par le processus d'émission d'une preuve d'action.

Un utilisateur déclenche une action au niveau de la borne d'action, par exemple, le paiement d'une transaction ou d'un objet sur une caisse enregistreuse et simultanément il transmet sa clé publique. Sur réception de l'action et de la clé publique de l'utilisateur, la borne d'action 2b génère un bloc de données d'émission 81 comprenant des paramètres d'horodatage 82, l'identifiant de la borne d'action, 83, les données associées à l'action 84. Lors de l'étape suivante, la borne d'action va chiffrer les données d'action avec la clé publique de l'utilisateur, 85, puis va générer un hash des données d'émission, 86, et une signature du hash des données d'émission 87. La borne émet ensuite la preuve d'action associée 88, pour stockage, 89, en local au niveau de l'utilisateur et/ou sur le serveur de stockage.

En final des étapes explicitées ci-dessus, un utilisateur a la capacité d'émettre différentes preuves qu'il aura mémorisées, de présence, de proximité et/ ou d'action et de les imprimer sous la forme d'un document à utiliser dans différents contextes.

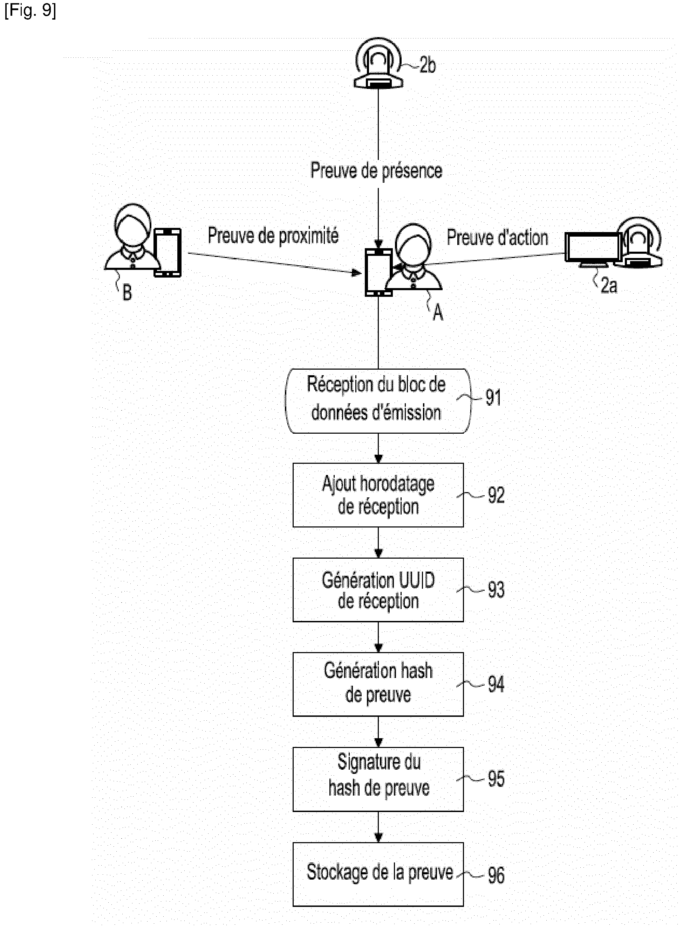

La description explicite à la figure 9 un exemple d'utilisation par un utilisateur des trois types de preuves introduites précédemment, permettant de comprendre le système selon l'invention donné à titre illustratif non limitatif. Sans sortir du cadre de l'invention, un utilisateur pourrait se servir d'une seule des preuves.

Les trois types de preuves sont reçus exclusivement par les dispositifs personnels de réception/émission de preuves équipant un utilisateur et les preuves sont gérées par l'application portefeuille de preuves d'un utilisateur.

L'utilisateur qui cherche à se constituer des preuves reçoit, par exemple, une ou plusieurs des preuves suivantes : une preuve de proximité émise par un autre utilisateur, une preuve de présence émise par une borne de présence et une preuve d'action émise par une borne d'action. La transmission de ces données de preuve d'usage est affectée, par exemple, de manière automatique via le protocole de communication utilisé dans le système et le support media.

L'utilisateur après réception d'une ou de plusieurs de ces trois preuves, ajoute des paramètres d'horodatage de réception, génère un identifiant, un hash de preuve et stocke les trois preuves dans l'application portefeuille de preuves, comme il est illustré à la figure 2.

Dans ce système, c'est l'utilisateur A, demandeur de preuves d'usage, qui décide de déclencher les applications. De ce fait, seul l'utilisateur qui souhaite obtenir des preuves d'usage a la maîtrise des preuves qu'il collecte. Il peut décider de les partager avec une entité spécifique (personne, autorité, service, etc.) ou de les rendre publiques. Un système ouvert et distribué permet à tous destinataires de ces preuves d'en vérifier l'authenticité.

Afin de vérifier qu'une personne est l'émettrice ou la réceptrice d'une preuve, la personne doit re-signer le bloc de données d'émission ou de réception selon le cas. Si la signature nouvellement générée correspond bien à la preuve demandée, sa validité est confirmée. Comme pour la preuve de proximité, seule l'application de la personne ayant émis ce jeton est activée et demande à celui qui a reçu de confirmer le dépôt de son avis.

Pour la signature, le système tiers contacte le dispositif émetteur de la preuve en lui envoyant les blocs suivants : les paramètres d'horodatage 21, un indicateur 22 identifiant un dispositif à un instant donné, des données de preuve de présence et/ou d'actions, 23. L'émetteur signe ces blocs, et renvoie la signature au système tiers qui la compare avec la signature "originelle" (24). Si les signatures concordent, cela prouve que le dispositif est bien l'émetteur de cette preuve." En effet, une signature numérique d'une donnée sera toujours identique si elle est effectuée avec une même clé privée. La clé étant privée, cela prouve que le dispositif émetteur est bien à l'origine de la preuve et que son intégrité est vérifiée.

La figure 9 illustre un exemple des étapes mises en œuvre lorsqu'un utilisateur A cherche à se constituer un ensemble de preuves en faisant appel à un individu avec lequel il a été à proximité, une borne de présence qui est capable d'indiquer qu'il se trouvait à une date donnée dans un lieu, une borne d'action qui a conservé en mémoire une action exécutée par l'utilisateur A.

Pour cela, l'utilisateur transmet une requête au serveur de broadcast. Sa requête comporte une demande de retrouver une preuve de proximité, une preuve de présence et une preuve d'action.

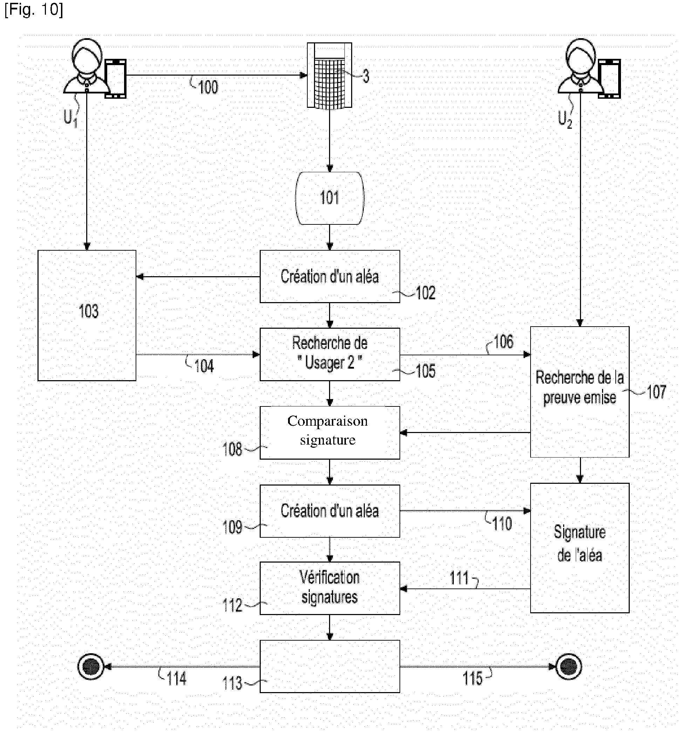

Une borne d'action qui reçoit cette requête et qui possède dans sa base de données une preuve d'action va transmettre cette preuve à l'utilisateur A. De même, un utilisateur qui a été dans le voisinage de l'utilisateur A lit la requête et s'il possède en mémoire une preuve de proximité correspondant à la requête de l'utilisateur A, il transmet cette preuve de proximité à cet utilisateur. La borne de présence fait de même. Dans l'exemple, on suppose que l'utilisateur a reçu des trois dispositifs précités une preuve de proximité, d'action, de présence. L'utilisateur va ajouter à ces données d'émission 91, des paramètres d'horodatage 92 et un indicateur identifiant l'individu 93. L'utilisateur A génère un hash de preuve et une signature du hash de preuve, 94, 95. L'étape suivante consiste à stocker les preuves par l'utilisateur A, 96, dans le but d'une utilisation future. La figure 10 illustre une succession d'étapes mises en œuvre par un utilisateur recherchant des preuves de proximité avec différents utilisateurs d'un système et une preuve de présence dans un lieu et à une date donnés.

Un utilisateur U₁ qui souhaite récupérer une preuve de présence dans un lieu donné, une preuve de proximité va exécuter les étapes illustrées en figure 10.

L'utilisateur U₁ transmet une demande de preuve de présence au niveau du serveur de broadcast. Ce dernier recherche un dispositif émetteur d'une preuve de présence, 101, et génère un aléa 102. L'aléa est transmis 103 à l'utilisateur U₁ demandeur de preuve pour signature. L'utilisateur U₁ va signer l'aléa et le retransmettre 104 au serveur de broadcast qui déclenche, 105, une procédure de recherche d'un utilisateur U₂ détenant une preuve de proximité. Le serveur de broadcast transmet, 106, au deuxième utilisateur U₂ l'identifiant de la preuve de proximité. Si le deuxième utilisateur U₂ dispose de la preuve de proximité, 107, il transmet au serveur de Broadcast un message contenant la signature des données d'émission de la preuve de proximité. Le serveur de broadcast compare, 108, la signature transmise par U₂ avec la signature du bloc d'émission contenu dans la preuve pour s'assurer que U2 est bien en possession de la preuve, puis génère un aléa correspondant 109. L'aléa associé au deuxième utilisateur est transmis à ce dernier pour signature, 110, avant retransmission de l'aléa signé, 121, au serveur de Broadcast qui vérifie 112 la signature avant de mettre en relation, 113, le premier utilisateur U₁ demandant une preuve de proximité et le deuxième utilisateur U₂ détenant la preuve de proximité par transmission, 114, 115, des adresses de chacun des utilisateurs. Lorsqu'un utilisateur désire récupérer une ou plusieurs preuves de présence, i.e., prouver sa présence dans un lieu, sur un système tiers, le processus suivant est lancé :
- L'utilisateur partage la preuve au système tiers et prouve qu'il est bien le destinataire de la preuve,
- Le système tiers contacte la borne du lieu en question pour vérifier qu'elle est bien émettrice de cette preuve. Pour cela, le service tiers envoie le bloc de données de réception au serveur de broadcast qui se charge de transmettre l'horodatage et l'identifiant UUID de réception du bloc de stockage regroupant, par exemple, l'ensemble des preuves publiques émises par des dispositifs publics. Si la preuve est retrouvée et correspond bien au lieu indiqué par l'utilisateur, le service tiers reçoit une confirmation et peut alors autoriser l'action (dépôt d'un avis, réservation, publication d'un article, etc.).

## Revendications

1. Procédé pour générer et sauvegarder un ensemble de données numériques ou preuves associées à un individu, au sein d'un système comprenant plusieurs dispositifs émetteurs et récepteurs de preuves et un support de communication entre lesdits dispositifs, **caractérisé en ce qu'**il comporte au moins les étapes suivantes :
Pour la génération des données constituant une preuve :
• Au niveau d'un dispositif émetteur d'une preuve, définir un bloc de données (20) caractérisant la preuve, le bloc de données comprenant au moins un paramètre d'horodatage (21), un indicateur (22) identifiant ledit dispositif émetteur de preuves, des données de preuve, (23), une signature (24) des données d'émission par un dispositif d'émission,
• Au niveau de l'individu souhaitant se constituer un ensemble de preuves, ajouter au bloc de données de réception (25) des données caractérisant une preuve, un paramètre d'horodatage (26), un indicateur (27) identifiant le dispositif récepteur d'une preuve, une signature de preuve (28),
Pour utiliser une preuve :
• Un individu émet une requête contenant ladite preuve en prouvant qu'il est destinataire de cette preuve à un système tiers,
• Ledit système tiers contacte le dispositif émetteur de la preuve en lui envoyant au moins ledit paramètre d'horodatage (21), ledit indicateur (22) identifiant le dispositif émetteur de preuves, lesdites données de preuve (23), l'émetteur signe lesdits blocs et renvoie la signature au système tiers qui compare ladite signature à ladite signature origine (24), afin que le système tiers valide la preuve dans le cas où les signatures concordent.

2. Procédé selon la revendication 1 **caractérisé en ce qu'**il comporte en outre les étapes suivantes :
• Un dispositif émetteur de preuves de proximité génère un ensemble de données d'émission composées d'une partie (31) contenant des paramètres d'horodatage, un identifiant d'émission du dispositif émetteur de preuves (32), une signature des données d'émission (33),
• Un individu reçoit une preuve de proximité émise par un dispositif émetteur et mémorise ladite preuve de proximité en ajoutant des données d'horodatage et d'identification du dispositif récepteur de preuves de proximité,
• Pour rechercher une preuve de proximité, ledit individu émet une requête de recherche de preuve vers un système tiers qui transmet les données d'horodatage contenu dans la requête et l'indicateur au serveur de stockage des données.

3. Procédé selon la revendication 1 **caractérisé en ce qu'**il comporte les étapes suivantes :
Une borne de présence
• Génère un bloc de données d'émission (61) comprenant au moins un paramètre d'horodatage (62), un identifiant (64), des données de proximité (65),
• Génère un fichier de chiffrement des données (hash) et signe les données chiffrées (66, 67),
• Émet la preuve de présence vers un utilisateur demandeur desdites données (68), ledit utilisateur mémorise ladite preuve de présence (69) après avoir ajouté des données d'horodatage et un indicateur du dispositif récepteur de la preuve,
Pour rechercher une preuve de présence par un individu, ledit individu émet une requête de recherche de preuve vers un système tiers qui transmet les données d'horodatage contenu dans la requête et son identifiant au serveur de stockage des données,
Lorsque la preuve est retrouvée dans le stockage des données, le service tiers valide la preuve.

4. Procédé selon la revendication 1 **caractérisé en ce qu'**il comporte au moins les étapes suivantes :
• Un dispositif (2b) génère une preuve d'action en transmettant à un individu un ensemble de donnés (81) contenant des paramètres d'horodatage (82), un identifiant (83), des données (84) caractérisant l'action, puis chiffre les données (85) avec une clé publique de l'individu, génère un hash et une signature du hash des données d'émission (87),
• Ledit dispositif (2b) émet ladite preuve d'action vers l'individu et/ou sur un espace de stockage.

5. Procédé selon la revendication 1 **caractérisé en ce qu'**il comporte en outre les étapes suivantes :
• Une requête de recherche de preuve est transmise par un premier utilisateur U₁ à un serveur de broadcast (100),
• Le serveur de broadcast recherche un dispositif émetteur d'une preuve (101) et génère un aléa (102),
• L'aléa est transmis (103) à l'utilisateur U₁ pour signature, l'utilisateur U₁ signe l'aléa et le retransmet (104) au serveur de broadcast qui déclenche, (105), une procédure de recherche d'un utilisateur U₂ détenant une preuve requise par le premier utilisateur,
• Le serveur de broadcast transmet, (106), au deuxième utilisateur U₂ l'identifiant de la preuve de proximité.
• Si le deuxième utilisateur U₂ dispose de la preuve, (107), il transmet au serveur de broadcast un message contenant la signature des données d'émission de la preuve de proximité,
• Le serveur de broadcast compare, (108), la signature transmise par le deuxième utilisateur U₂ avec la signature du bloc d'émission contenu dans la preuve pour s'assurer que le deuxième utilisateur U2 est en possession de la preuve, puis génère un aléa correspondant (109),
• L'aléa associé au deuxième utilisateur U₂ est transmis à ce dernier pour signature, (110), avant retransmission de l'aléa signé, (111), au serveur de broadcast qui vérifie (112) les signatures avant de mettre en relation, (113), le premier utilisateur U₁ demandant une preuve de proximité et le deuxième utilisateur U₂ détenant la preuve d'usage par transmission des adresses de chacun des utilisateurs.

6. Système pour construire un ensemble de données correspondant à une preuve associée à un premier utilisateur U₁ au sein d'un système comprenant un ou plusieurs dispositifs émetteurs de preuve (2a, 2b) communiquant entre eux via un protocole de communication, un serveur de broadcast (3) et un espace de stockage (15) **caractérisé en ce qu'**il comporte au moins les éléments suivants :
• Un dispositif émetteur de preuves est équipé de moyens de communication et d'une application configurée pour générer un ensemble de données (20) comprenant une donnée d'horodatage (21) , un identifiant (22), des données (23) caractérisant une preuve, un paramètre de signature des données (24),
• Ledit premier utilisateur est équipé de moyens de communication et d'une application portefeuille de preuves (13) configurée pour ajouter à un ensemble de données reçues, un paramètre d'horodatage (26), un indicateur (27) identifiant le dispositif émetteur de l'ensemble de données, une signature (28), une clé de chiffrement,
• Un dispositif tiers configuré pour contacter le dispositif émetteur de la preuve en lui envoyant au moins ledit paramètre d'horodatage (21), ledit indicateur (22) identifiant le dispositif émetteur de preuves, lesdites données de preuve (23), l'émetteur signe lesdits blocs et renvoie la signature au système tiers configuré pour comparer ladite signature à ladite signature origine (24), et pour valider la preuve lorsque les signatures concordent.

7. Système selon la revendication 6 **caractérisé en ce qu'**un moyen d'émission/réception est configuré pour dialoguer par Wifi, radio, Bluetooth.

8. Système selon l'une des revendications 6 à 7 **caractérisé en ce que** l'espace de stockage (15) se trouve sur un serveur de stockage (4).

9. Système selon l'une des revendications 6 à 8 **caractérisé en ce qu'**un dispositif émetteur de preuves est une borne d'action configurée pour émettre une preuve indiquant qu'une action a été réalisée par un individu.

## Patentansprüche

1. Verfahren zum Erzeugen und Sichern eines Satzes von mit einer Person assoziierten digitalen Daten oder Nachweisen innerhalb eines Systems, das mehrere Nachweissende- und -empfangsgeräte und ein Kommunikationsmedium zwischen den genannten Geräten umfasst, **dadurch gekennzeichnet, dass** es mindestens die folgenden Schritte beinhaltet:
für die Erzeugung von den einen Nachweis darstellenden Daten:
• Definieren, auf der Ebene eines einen Nachweis sendenden Geräts, eines den Nachweis charakterisierenden Datenblocks (20), wobei der Datenblock mindestens einen Zeitstempelparameter (21), einen Indikator (22), der das genannte Nachweissendegerät identifiziert, Nachweisdaten (23) und eine Signatur (24) der Sendedaten durch ein Sendegerät umfasst,
• Hinzufügen zum Empfangsdatenblock (25), auf der Ebene der Person, die einen Nachweissatz zusammenstellen möchte, von einen Nachweis charakterisierenden Daten, einem Zeitstempelparameter (26), einem Indikator (27), der das einen Nachweis empfangende Gerät identifiziert, und einer Nachweissignatur (28),
zum Nutzen eines Nachweises:
• eine Person sendet eine den genannten Nachweis enthaltende Anforderung, indem sie nachweist, dass sie der Adressat dieses Nachweises ist, zu einem Drittsystem,
• das genannte Drittsystem kontaktiert das den Nachweis sendende Gerät, indem es mindestens den genannten Zeitstempelparameter (21), den genannten Indikator (22), der das Nachweissendegerät identifiziert, und die genannten Nachweisdaten (23) dorthin sendet, der Sender signiert die genannten Blöcke und sendet die Signatur an das Drittsystem zurück, das die genannte Signatur mit der genannten Ursprungssignatur (24) vergleicht, damit das Drittsystem den Nachweis validiert, wenn die Signaturen übereinstimmen.

2. Verfahren nach Anspruch 1, **dadurch gekennzeichnet, dass** es außerdem die folgenden Schritte beinhaltet:
• ein Nähenachweissendegerät erzeugt einen Satz von Sendedaten bestehend aus einem Teil (31), der Zeitstempelparameter, eine Sendekennung des Nachweissendegeräts (32) und eine Signatur der Sendedaten (33) enthält,
• eine Person empfängt einen von einem Sendegerät gesendeten Nähenachweis und speichert den genannten Nähenachweis, indem sie Zeitstempel- und Identifikationsdaten des Nähenachweisempfangsgeräts hinzufügt,
• zum Suchen nach einem Nähenachweis sendet die genannte Person eine Nachweissuchanforderung zu einem Drittsystem, das die in der Anforderung enthaltenen Zeitstempeldaten und den Indikator zum Datenspeicherserver überträgt.

3. Verfahren nach Anspruch 1, **dadurch gekennzeichnet, dass** es die folgenden Schritte beinhaltet:
ein Anwesenheitsanschluss
• erzeugt einen Sendedatenblock (61), der mindestens einen Zeitstempelparameter (62), eine Kennung (64) und Nähedaten (65) umfasst,
• erzeugt eine Datei zur Verschlüsselung der Daten (Hash) und signiert die verschlüsselten Daten (66, 67),
• sendet den Anwesenheitsnachweis zu einem die genannten Daten (68) anfordernden Benutzer, der genannte Benutzer speichert den genannten Anwesenheitsnachweis (69) nach dem Hinzufügen von Zeitstempeldaten und eines Indikators des den Nachweis empfangenden Geräts,
zum Suchen nach einem Anwesenheitsnachweis durch eine Person sendet die genannte Person eine Nachweissuchanforderung zu einem Drittsystem, das die in der Anforderung enthaltenen Zeitstempeldaten und seine Kennung zum Datenspeicherserver überträgt, wenn der Nachweis im Datenspeicher gefunden wird, validiert der Drittanbieterdienst den Nachweis.

4. Verfahren nach Anspruch 1, **dadurch gekennzeichnet, dass** es mindestens die folgenden Schritte beinhaltet:
• ein Gerät (2b) erzeugt einen Handlungsnachweis, indem es einen Datensatz (81), der Zeitstempelparameter (82), eine Kennung (83) und die Handlung charakterisierende Daten (84) enthält, zu einer Person überträgt, dann verschlüsselt die Daten (85) mit einem öffentlichen Schlüssel der Person, und erzeugt ein Hash und eine Signatur des Hash der Sendedaten (87),
• das genannte Gerät (2b) sendet den genannten Handlungsnachweis zu der Person und/oder auf einen Speicherplatz.

5. Verfahren nach Anspruch 1, **dadurch gekennzeichnet, dass** es außerdem die folgenden Schritte beinhaltet:
• eine Nachweissuchanforderung wird durch einen ersten Benutzer U₁ zu einem Broadcast-Server übertragen (100),
• der Broadcast-Server sucht nach einem einen Nachweis sendenden Gerät (101) und erzeugt einen Zufall (102),
• der Zufall wird zum Benutzer U_{I} zur Signatur übertragen (103), der Benutzer U₁ signiert den Zufall und überträgt (104) ihn erneut zum Broadcast-Server, der einen Suchvorgang nach einem Benutzer U₂ auslöst (105), der einen vom ersten Benutzer erforderten Nachweis besitzt,
• der Broadcast-Server überträgt (106) die Kennung des Nähenachweises zum zweiten Benutzer U₂,
• wenn der zweite Benutzer U₂ den Nachweis besitzt (107), überträgt er eine Nachricht, die die Signatur der Sendedaten des Nähenachweises enthält, zum Broadcast-Server,
• der Broadcast-Server vergleicht (108) die vom zweiten Benutzer U₂ übertragene Signatur mit der Signatur des im Nachweis enthaltenen Sendeblocks, um sicherzustellen, dass der zweite Benutzer U₂ im Besitz des Nachweises ist, und dann einen entsprechenden Zufall erzeugt (109),
• der mit dem zweiten Benutzer U₂ assoziierte Zufall wird zu diesem zur Signatur übertragen (110) vor dem erneuten Übertragen (111) des signierten Zufalls zum Broadcast-Server, der die Signaturen überprüft (112), bevor er den einen Nähenachweis anfordernden ersten Benutzer U₁ und den den Nutzungsnachweis besitzenden zweiten Benutzer U₂ durch Übertragen der Adressen jedes der Benutzer miteinander in Verbindung setzt (113).

6. System zum Aufbauen eines Datensatzes entsprechend einem mit einem ersten Benutzer U₁ assoziierten Nachweis innerhalb eines Systems, das ein oder mehrere über ein Kommunikationsprotokoll miteinander kommunizierende Nachweissendegeräte (2a, 2b), einen Broadcast-Server (3) und einen Speicherplatz (15) umfasst, **dadurch gekennzeichnet, dass** es mindestens die folgenden Elemente umfasst:
• ein Nachweissendegerät ist mit Kommunikationsmitteln und einer Anwendung ausgestattet, die zum Erzeugen eines Datensatzes (20) konfiguriert ist, der ein Zeitstempeldatenelement (21), eine Kennung (22), einen Nachweis charakterisierende Daten (23) und einen Parameter zur Signierung der Daten (24) umfasst,
• der genannte erste Benutzer ist mit Kommunikationsmitteln und einer Nachweisportfolio-Anwendung (13) ausgestattet, konfiguriert zum Hinzufügen eines Zeitstempelparameters (26), eines Indikators (27), der das den Datensatz sendende Gerät identifiziert, einer Signatur (28) und eines Verschlüsselungsschlüssels zu einem Satz empfangener Daten,
• ein Drittgerät, konfiguriert zum Kontaktieren des den Nachweis sendenden Geräts, indem es zumindest den genannten Zeitstempelparameter (21), den genannten Indikator (22), der das Nachweissendegerät identifiziert, und die genannten Nachweisdaten (23) dorthin sendet, der Sender signiert die genannten Blöcke und sendet die Signatur an das Drittsystem zurück, das zum Vergleichen der genannten Signatur mit der genannten Ursprungssignatur (24) und zum Validieren des Nachweises konfiguriert ist, wenn die Signaturen übereinstimmen.

7. System nach Anspruch 6, **dadurch gekennzeichnet, dass** ein Sende-/Empfangsmittel zum Führen von Dialogen über Wifi, Funk, Bluetooth konfiguriert ist.

8. System nach einem der Ansprüche 6 bis 7, **dadurch gekennzeichnet, dass** sich der Speicherplatz (15) auf einem Speicherserver (4) befindet.

9. System nach einem der Ansprüche 6 bis 8, **dadurch gekennzeichnet, dass** ein Nachweissendegerät ein Handlungsanschluss ist, der zum Senden eines Nachweises konfiguriert ist, der anzeigt, dass eine Handlung von einer Person ausgeführt wurde.

## Claims

1. Method for generating and saving a set of digital data or pieces of evidence associated with an individual, within a system comprising several devices transmitting and receiving pieces of evidence and a medium for communication between said devices, **characterized in that** it includes at least the following steps:
for the generation of the data constituting a piece of evidence:
• with regard to a device transmitting a piece of evidence, defining a data block (20) characterizing the piece of evidence, the data block comprising at least a timestamp parameter (21), an indicator (22) identifying said device transmitting pieces of evidence, evidence data (23) and a signature (24) of the transmission data by a transmission device,
• with regard to the individual desiring to build up an evidence set, adding data characterizing a piece of evidence, a timestamp parameter (26), an indicator (27) identifying the device receiving a piece of evidence, and an evidence signature (28) to the receiving data block (25),
in order to use a piece of evidence:
• an individual transmits a request containing said piece of evidence, proving that they are the recipient of this piece of evidence, to a third-party system,
• said third-party system contacts the device transmitting the piece of evidence, sending it at least said timestamp parameter (21), said indicator (22) identifying the device transmitting pieces of evidence, and said evidence data (23), the transmitter signs said blocks and sends the signature back to the third-party system, which compares said signature with said original signature (24), so that the third-party system validates the piece of evidence if the signatures match.

2. Method according to claim 1, **characterized in that** it moreover includes the following steps:
• a device transmitting pieces of proximity evidence generates a set of transmission data made up of a part (31) containing timestamp parameters, a transmission identifier of the device transmitting pieces of evidence (32), and a signature of the transmission data (33),
• an individual receives a piece of proximity evidence transmitted by a transmitting device and stores said piece of proximity evidence, adding timestamp and identification data of the device receiving pieces of proximity evidence,
• in order to search for a piece of proximity evidence, said individual transmits an evidence search request to a third-party system, which transmits the timestamp data contained in the request and the indicator to the server storing the data.

3. Method according to claim 1, **characterized in that** it includes the following steps:
a presence terminal
• generates a transmission data block (61) comprising at least a timestamp parameter (62), an identifier (64) and proximity data (65),
• generates a data encryption file (hash) and signs the encrypted data (66, 67),
• transmits the piece of presence evidence to a user requesting said data (68), said user stores said piece of presence evidence (69) after having added timestamp data and an indicator of the device receiving the piece of evidence,
in order to search for a piece of presence evidence by an individual, said individual transmits an evidence search request to a third-party system, which transmits the timestamp data contained in the request and its identifier to the server storing the data,
when the piece of evidence is found in the data storage, the third-party service validates the piece of evidence.

4. Method according to claim 1, **characterized in that** it includes at least the following steps:
• a device (2b) generates a piece of action evidence, transmitting a data set (81) containing timestamp parameters (82), an identifier (83) and data (84) characterizing the action to an individual, then encrypts the data (85) with a public key of the individual, and generates a hash and a signature of the hash of the transmission data (87),
• said device (2b) transmits said piece of action evidence to the individual and/or onto a storage space.

5. Method according to claim 1, **characterized in that** it moreover includes the following steps:
• an evidence search request is transmitted by a first user U₁ to a broadcast server (100),
• the broadcast server searches for a device transmitting a piece of evidence (101) and generates a random variable (102),
• the random variable is transmitted (103) to the user U₁ for signature, the user U_{I} signs the random variable and transmits it back (104) to the broadcast server, which triggers (105) a search process for a user U₂ holding a piece of evidence required by the first user,
• the broadcast server transmits (106) the identifier of the piece of proximity evidence to the second user U₂,
• if the second user U₂ has the piece of evidence (107), they transmit a message containing the signature of the transmission data of the piece of proximity evidence to the broadcast server,
• the broadcast server compares (108) the signature transmitted by the second user U₂ with the signature of the transmission block contained in the piece of evidence in order to check that the second user U₂ is in possession of the piece of evidence, then generates a corresponding random variable (109),
• the random variable associated with the second user U₂ is transmitted to the latter for signature (110), before the signed random variable is transmitted back (111) to the broadcast server, which verifies (112) the signatures before putting (113) the first user U₁ requesting a piece of proximity evidence and the second user U₂ holding the piece of use evidence in contact by transmitting the addresses of each of the users.

6. System for constructing a data set corresponding to a piece of evidence associated with a first user U₁ within a system comprising one or more evidence-transmitting devices (2a, 2b) communicating with each other via a communication protocol, a broadcast server (3) and a storage space (15), **characterized in that** it contains at least the following elements:
• a device transmitting pieces of evidence is equipped with communication means and an application configured to generate a data set (20) comprising a timestamp data item (21), an identifier (22), data (23) characterizing a piece of evidence, and a data signature parameter (24),
• said first user is equipped with communication means and an evidence portfolio application (13) configured to add a timestamp parameter (26), an indicator (27) identifying the device transmitting the data set, a signature (28) and an encryption key to a set of received data,
• a third-party device configured to contact the device transmitting the piece of evidence, sending it at least said timestamp parameter (21), said indicator (22) identifying the device transmitting pieces of evidence, and said evidence data (23), the transmitter signs said blocks and sends the signature back to the third-party system configured to compare said signature with said original signature (24), and to validate the piece of evidence when the signatures match.

7. System according to claim 6, **characterized in that** a transmitting/receiving means is configured to communicate via wifi, radio, Bluetooth.

8. System according to one of claims 6 to 7, **characterized in that** the storage space (15) is located on a storage server (4).

9. System according to one of claims 6 to 8, **characterized in that** a device transmitting pieces of evidence is an action terminal configured to transmit a piece of evidence indicating that an action has been performed by an individual.
